# EUROPEAN PATENT APPLICATION

(11) **EP 3 650 505 A1**
(43) Date of publication of application: **13.05.2020**
(21) Application number: 19199544.8
(22) Date of filing: 25.09.2019
(51) Int. Cl.: C09D 5/08, C09D 7/60, C09D 163/04

(54) **NON-CHROMATED CORROSION-RESISTANT COATING**

(30) Priority: 09.11.2018 US 201816185407
(71) Applicant: Hamilton Sundstrand Corporation, Charlotte, NC 28217-4578 (US)
(72) Inventor: FOLSOM, Michael E., Ellingtom, CT Connecticut 06029 (US); KAPALCZYNSKI, Krystyna, West Hartford, CT Connecticut 06107 (US); EMERSON, Sean C., Broad Brook, CT Connecticut 06016 (US); KRYZMAN, Michael A., West Hartford, CT Connecticut 06107 (US); ZHANG, Weilong, Glastonbury, CT Connecticut 06033 (US); PINKERMAN, Thomas F., South Windsor, CT Connecticut 06074 (US); ZAFIRIS, Georgios S., Glastonbury, CT Connecticut 06033 (US)
(74) Representative: Dehns

(57) **Abstract**

In one aspect, a coating (10) for protecting a component exposed to a corrosive environment includes an epoxy phenolic resin (16), a non-chromated corrosion inhibitor pigment additive (14) and a dispersing agent. In another aspect, a method (20) of protecting an article exposed to a corrosive environment includes applying a corrosion-resistant epoxy phenolic coating to a surface of the article exposed to a corrosive environment and curing the corrosion-resistant epoxy phenolic coating. The epoxy phenolic coating contains up to 15 percent by volume of a non-chromated corrosion inhibitor pigment additive having a particle size less than 10 micrometers.

## Description

### BACKGROUND

The present invention relates generally to coatings and more particularly to corrosion-resistant coatings.

Aluminum aircraft heat exchangers placed in service in areas of the world with significant air pollution can exhibit considerable corrosion caused by sulfuric acid formed by the reaction of sulfur containing pollutants with atmospheric moisture. Currently used barrier coatings have been only partially effective in preventing or reducing this corrosion. Conventional hexavalent chromium-containing wash primers used to improve corrosion resistance have associated environmental and health risks and have shown insufficient results in highly corrosive environments. The addition of multiple barrier coating layers, while capable of delaying corrosion, significantly increases manufacture time and cost. Improved and more environmentally friendly corrosion-resistant coatings are needed to increase component life while improving manufacturing throughput and reducing manufacturing costs.

### SUMMARY

In one aspect, a coating for protecting a component exposed to a corrosive environment includes an epoxy phenolic resin, a non-chromated corrosion inhibitor pigment additive comprising at least one of cerium citrate and zinc molybdate and a dispersing agent.

In another aspect, an article for use in a corrosive environment includes a metallic substrate and a corrosion-resistant coating disposed on a surface of the metallic substrate. The corrosion-resistant coating includes an epoxy phenolic resin, a non-chromated corrosion inhibitor pigment additive comprising at least one of cerium citrate and zinc molybdate, and a dispersing agent.

In yet another aspect, a method of protecting an article exposed to a corrosive environment includes applying a corrosion-resistant epoxy phenolic coating to a surface of the article exposed to the corrosive environment and curing the corrosion-resistant epoxy phenolic coating. The epoxy phenolic coating containing up to 15 percent by volume of a non-chromated corrosion inhibitor pigment additive having a particle size less than 10 micrometers.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a schematic view of a corrosion-resistant coating on an article.
FIG. 2 is a method of applying a corrosion-resistant coating to an article.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

Currently, epoxy phenolic barrier coatings such as Rockhard coatings are used in combination with a hexavalent chromium-containing wash primer to protect metallic aircraft components from corrosion. A surface of the metallic component is deoxidized prior to applying a thin coating of hexavalent chromium-containing wash primer. The primer serves to improve coating adhesion and corrosion protection, but has been shown to provide generally poor corrosion protection in regions of the world with high air pollution. To improve corrosion resistance in highly corrosive environments, multiple layers of the epoxy phenolic coating must be applied to provide barrier protection of the component. The application of multiple coats can significantly reduce manufacturing throughput and increase manufacturing costs, while the use of hexavalent chromium produces toxic environmental waste and can pose a significant health hazard in the manufacturing process.

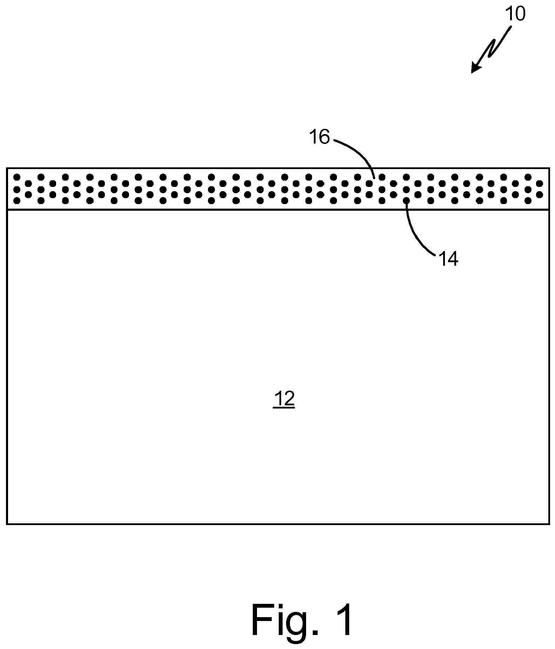

A non-chromated corrosion inhibitor pigment can be added to an epoxy phenolic solvent-based coating system to provide corrosion resistance while reducing a coating thickness and the number of coats applied to a metallic substrate and eliminating the need for applying a chromate-containing wash primer. FIG. 1 is a schematic view of corrosion-resistant coating 10 on substrate 12. Substrate 12 can be an aircraft component including, but not limited to, heat exchangers, ductwork, valves, or gearbox housings formed from aluminum or magnesium alloys. Coating 10 is an epoxy phenolic coating containing a non-chromated corrosion inhibitor pigment. As schematically illustrated in FIG. 1, non-chromated corrosion inhibitor particles 14 are dispersed in epoxy phenolic coating matrix 16 comprising an epoxy phenolic resin. A synergistic relationship exists between epoxy phenolic resin 16 and non-chromated corrosion inhibitor pigment 14, providing improved corrosion resistance. The phenolic resin is less permeable to water than conventional epoxy bond primer systems and the non-chromated corrosion inhibitor pigment 14 exhibits corrosion-resistant properties.

Epoxy phenolic resin 16 can be a Rockhard coating (i.e., Rockhard 961-450-002). Non-chromated corrosion inhibitor pigment 14 can be a molybdate and cerium-based corrosion inhibiting additive powder comprising an anodic corrosion inhibitor and a cathodic corrosion inhibitor, as disclosed in U.S. Patent No. 10,023,963. Coating 10 can have a content of non-chromated corrosion inhibitor pigment 14 equal to or less than 15 percent by volume and preferably, equal to or less than five percent by volume. High volumes of non-chromated corrosion inhibitor pigment 14 can detrimentally impact the mechanical properties of coating 10, with coating 10 becoming permeable to fluid when the volume of corrosion inhibitor pigment 14 exceeds around 20 percent. Increased fluid permeability can be caused by the formation of micropores and pinholes after curing coating 10. Furthermore, adhesion strength can be reduced with increased volumes of corrosion inhibitor pigment 14. For the applications disclosed herein, coating 10 can provide acceptable corrosion resistance in an aggressive corrosion environment with a content of corrosion inhibitor pigment 14 in coating 10 equal to or less than five percent by volume.

Non-chromated corrosion inhibitor pigment 14 can have a particle size less than ten micrometers and preferably, less than five micrometers. The particle size can be selected to be smaller than a thickness of coating 10 to limit the formation of micropores and pinholes through coating 10 caused by particles extending beyond a thickness of coating 10. In some embodiments, coating 10 can have a maximum thickness of about 25.4 micrometers. In another embodiment, coating 10 can have a maximum thickness of 12.7 micrometers, and preferably a thickness between 7.6 micrometers and 12.7 micrometers, which can provide acceptable corrosion resistance in an aggressive corrosion environment.

Non-chromated corrosion inhibitor pigment 14 can be added to epoxy phenolic resin 16. A basket mill and high shear mixer can be used to reduce the particle size of non-chromated corrosion inhibitor pigment 14 to the desirable micrometer range and distribute non-chromated corrosion inhibitor pigment 14 throughout epoxy phenolic resin 16. A surfactant or dispersing agent compatible with corrosion inhibitor pigment 14 and epoxy phenolic resin 16 can be used to produce a stable suspension for improving a shelf life and application of coating 10. Compatible dispersing agents may include anionic, cationic, or non-ionic surfactants as known in the art.

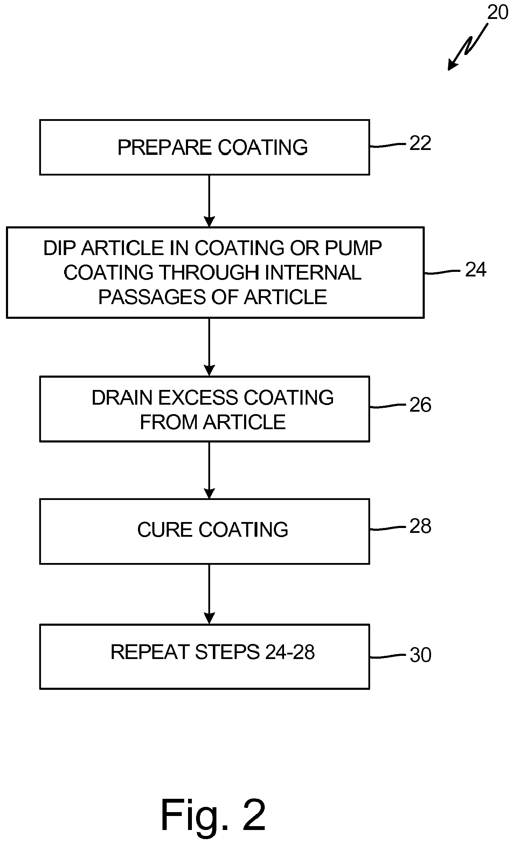

FIG. 2 illustrates method 20 of protecting an article exposed to a corrosive environment. As previously disclosed, the article can be a metallic component exposed to a corrosive environment including, but not limited to, aircraft heat exchangers, ductwork, valves, and gearbox housings formed from aluminum or magnesium alloy. Method 20 includes preparing corrosion-resistant epoxy phenolic coating 10 (step 22); dipping the article in coating 10, spraying coating 10 on article surfaces, and/or pumping coating 10 through internal passages of the article (step 24); draining excess coating 10 from internal passages or a surface of the article (step 26); curing coating 10 (step 28); and repeating steps 24-28 until a desired coating thickness is achieved (step 30). As previously disclosed, coating 10 can be prepared by mixing non-chromated corrosion inhibitor pigment 14 with phenolic epoxy resin 16 and a surfactant, such that coating 10 contains up to 15 percent by volume non-chromated corrosion inhibitor pigment 14, and preferably equal to or less than five percent by volume, with a particle size of less than ten micrometers and preferably less than five micrometers.

Coating 10 can be applied directly to metallic substrate 12 without a hexavalent chromium-containing primer wash or other primer used to improve adhesion or limit corrosion and without deoxidizing the substrate surface. Substrate 12 can be dipped in coating 10 or coating 10 can be sprayed on substrate surfaces. To coat internal surfaces, such as internal heat exchanger surfaces, coating 10 can be pumped through internal passages of the component. In some embodiments, plumbing can be connected to inlets and outlets of the heat exchanger for pumping coating 10 through internal passageways. Such a method can be used to coat all internal fins and other heat exchanging structures and surfaces. Excess coating 10 can be drained from internal passages or the surface of the article leaving a layer of coating 10 on the article. Coating 10 can be cured initially at room temperature to remove solvents and then further cured with the addition of heat. In some embodiments, multiple layers of coating 10 can be applied to substrate 12 to achieve a desired coating thickness. Each layer can be partially cured before application of the subsequent layer. After a desired coating thickness is achieved, coating 10 can undergo a final cure and heat treatment. For example, each layer of coating 10 can undergo an initial cure at room temperature for 60 minutes, followed by curing at 220 °F for 45-60 minutes, followed by curing at 350 °F for 60-70 minutes, which can be extended to 8-9 hours in the final cure and heat treatment. For the application of coating 10 to an aluminum alloy heat exchanger (e.g., 6000 series aluminum), coating 10 can have a thickness of between 7.6 micrometers and 12.7 micrometers to provide adequate protection in corrosive environments. In some embodiments, two layers of coating 10 can be applied to substrate 12 to achieve a coating thickness between 7.6 micrometers and 12.7 micrometers. In another embodiment the coating film thickness can be equal or less than 25.4 micrometers, or between 12.7 and 25.4 micrometers, or equal to or less than 12.7 micrometers. This is a substantial improvement over barrier coating systems, which can require seven or more layers to achieve a tolerable level of corrosion protection.

The addition of non-chromated corrosion inhibitor pigment to an epoxy phenolic solvent-based coating system can provide improved corrosion resistance, while reducing the number of coats needed and eliminating the need for deoxidizing a metallic substrate surface and applying a chromate containing wash primer. Improved corrosion resistance increases component life. The reduction in coats applied results in improved manufacturing throughput and reduced manufacturing costs. And the elimination of the hexavalent chromium-containing wash primer makes the manufacturing process, as well as the manufactured article, more environmentally friendly.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

A coating for protecting a component exposed to a corrosive environment includes an epoxy phenolic resin, a non-chromated corrosion inhibitor pigment additive comprising at least one of cerium citrate and zinc molybdate and a dispersing agent.

The coating of the preceding paragraph can optionally include, additionally and/or alternatively, any one or more of the following features, configurations and/or additional components:
The coating of any of the preceding paragraphs, wherein a volume content of the non-chromated corrosion inhibitor pigment additive can be equal to or less than 15 percent.
The coating of any of the preceding paragraphs, wherein a volume content of the non-chromated corrosion inhibitor pigment additive can be equal to or less than 5 percent.
The coating of any of the preceding paragraphs, wherein the non-chromated corrosion inhibitor pigment additive can have a particle size less than 10 micrometers.
The coating of any of the preceding paragraphs, wherein the non-chromated corrosion inhibitor pigment additive can have a particle size less than 5 micrometers.

An article for use in a corrosive environment includes a metallic substrate and a corrosion-resistant coating disposed on a surface of the metallic substrate. The corrosion-resistant coating includes an epoxy phenolic resin, a non-chromated corrosion inhibitor pigment additive comprising at least one of cerium citrate and zinc molybdate, and a dispersing agent.

The article of the preceding paragraph can optionally include, additionally and/or alternatively, any one or more of the following features, configurations and/or additional components:
The article of any of the preceding paragraphs, wherein a volume content of the non-chromated corrosion inhibitor pigment additive can be equal to or less than 15 percent.
The article of any of the preceding paragraphs, wherein a volume content of the non-chromated corrosion inhibitor pigment additive can be equal to or less than 5 percent.
The article of any of the preceding paragraphs, wherein the non-chromated corrosion inhibitor pigment additive can have a particle size less than 10 micrometers.
The article of any of the preceding paragraphs, wherein the non-chromated corrosion inhibitor pigment additive can have a particle size less than 5 micrometers.
The article of any of the preceding paragraphs, wherein the coating can have a thickness equal to or less than 25.4 micrometers.
The article of any of the preceding paragraphs, wherein the coating can have a thickness equal to or less than 12.7 micrometers.
The article of any of the preceding paragraphs, wherein the substrate can be a non-deoxidized aluminum alloy or magnesium alloy.
The article of any of the preceding paragraphs, wherein the substrate surface can be free of a chromate containing wash primer or chromate containing conversion coat.
The article of any of the preceding paragraphs, wherein the article can be a heat exchanger and the surface of the substrate is an internal surface of the heat exchanger.

A method of protecting an article exposed to a corrosive environment includes applying a corrosion-resistant epoxy phenolic coating to a surface of the article exposed to the corrosive environment and curing the corrosion-resistant epoxy phenolic coating. The epoxy phenolic coating containing up to 15 percent by volume of a non-chromated corrosion inhibitor pigment additive having a particle size less than 10 micrometers.

The method of the preceding paragraph can optionally include, additionally and/or alternatively, any one or more of the following features, configurations, additional components, and/or steps:
The method of any of the preceding paragraphs, wherein the surface of the article can be a non-deoxidized aluminum alloy or magnesium alloy free of a chromate containing wash primer or chromate containing conversion coat.

The method of any of the preceding paragraphs, wherein the volume content of the non-chromated corrosion inhibitor pigment additive can be equal to or less than 5 percent.

The method of any of the preceding paragraphs, wherein the article can be a heat exchanger and wherein applying the coating comprises pumping the coating through internal passages of the heat exchanger to coat internal surfaces and draining excess coating to leave a coating thickness equal to or less than 25.4 micrometers, or less than 12.7 micrometers.

The method of any of the preceding paragraphs can further include repeating the steps of applying the corrosion-resistant epoxy phenolic coating and curing the corrosion-resistant epoxy phenolic coating only once to achieve a final coating thickness.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A coating (10) for protecting a component exposed to a corrosive environment, the coating comprising:
an epoxy phenolic resin (16);
a non-chromated corrosion inhibitor pigment additive (14) comprising at least one of cerium citrate and zinc molybdate; and
a dispersing agent.

2. The coating of claim 1, wherein a volume content of the non-chromated corrosion inhibitor pigment additive is equal to or less than 15 percent.

3. The coating of claim 2, wherein a volume content of the non-chromated corrosion inhibitor pigment additive is equal to or less than 5 percent.

4. The coating of claim 2, wherein the non-chromated corrosion inhibitor pigment additive (14) has a particle size less than 10 micrometers.

5. The coating of claim 4, wherein the non-chromated corrosion inhibitor pigment additive (14) has a particle size less than 5 micrometers.

6. An article for use in a corrosive environment, the article comprising:
a metallic substrate (12); and
a corrosion-resistant coating (10) disposed on a surface of the metallic substrate,
the coating comprising the coating of any preceding claim.

7. The article of claim 6, wherein the coating (10) has a thickness equal to or less than 25.4 micrometers.

8. The article of claim 7, wherein the coating (10) has a thickness equal to or less than 12.7 micrometers.

9. The article of claim 8, wherein the substrate (12) is a non-deoxidized aluminum alloy or magnesium alloy.

10. The article of claim 8, wherein the substrate surface is free of a chromate containing wash primer or chromate containing conversion coat.

11. A method (20) of protecting an article exposed to a corrosive environment, the method comprising:
applying a corrosion-resistant epoxy phenolic coating to a surface of the article exposed to a corrosive environment, wherein the coating comprises up to 15 percent by volume of a non-chromated corrosion inhibitor pigment additive comprising at least one of cerium citrate and zinc molybdate having a particle size less than 10 micrometers; and
curing the corrosion-resistant epoxy phenolic coating.

12. The method of claim 11, wherein the surface of the article is a non-deoxidized aluminum alloy or magnesium alloy free of a chromate containing wash primer or chromate containing conversion coat.

13. The method of claims 11 or 12, wherein the volume content of the non-chromated corrosion inhibitor pigment additive is equal to or less than 5 percent.

14. The method of claim 13, wherein the article is a heat exchanger and wherein applying the coating comprises:
pumping the coating through internal passages of the heat exchanger to coat internal surfaces; and
draining excess coating to leave a coating thickness of equal to or less than 25.4 micrometers.

15. The method of claim 13, and further comprising repeating the steps of applying the corrosion-resistant epoxy phenolic coating and curing the corrosion-resistant epoxy phenolic coating, wherein the steps are repeated only once to achieve a final coating thickness.
